Europäisches Patentamt

European Patent Office

Office européen des brevets

(11) Publication number: **0 341 924**
**A2**

## EUROPEAN PATENT APPLICATION

(21) Application number: 89304567.4

(22) Date of filing: 05.05.89

(51) Int. Cl.⁴: **C04B 35/00 , C04B 35/58 ,**
**C08G 77/62**

(30) Priority: 11.05.88 US 193263

(43) Date of publication of application:
15.11.89 Bulletin 89/46

(84) Designated Contracting States:
**DE FR GB IT**

(71) Applicant: **ETHYL CORPORATION**
**451 Florida Boulevard**
**Baton Rouge, LA 70801(US)**

(72) Inventor: **Rogers, John Joseph**
**1216 North Leighton Drive**
**Baton Rouge Louisiana 70806(US)**

(74) Representative: **Collier, Jeremy Austin Grey et**
**al**
**J.A.Kemp & Co. 14, South Square Gray's Inn**
**London WC1R 5EU(GB)**

(54) **Densified silicon nitride ceramics and their production.**

(57) Silicon nitride ceramics are produced by subjecting a silicon nitride preform composed of an intimate mixture of crystalline silicon nitride and an amorphous Si-N or Si-N-C or Si-C phase to rapid omnidirectional compaction. For best results this amorphous phase should be substantially uniformly distributed throughout the preform. Because of the presence of the amorphous phase, the preform is believed to possess atomic (nanosized) sintering sites which enable compaction with full sintering to occur yielding a densified product which retains its desirable strength and creep resistance properties even when subjected to temperatures in the range of 900°C and above. The preform used in this process may be formed by pyrolyzing in nitrogen or ammonia, a molded part made from an intimate mixture of finely divided silicon nitride powder and a finely divided preceramic organosilicon polymeric binder, preferably a polycarbosilane or polycarbosiloxane, most preferably an organopolysilazane. In conducting the omnidirectional compaction, the preform is positioned within a body of molten die material, preferably a molten ceramic material such as glass, which in turn is maintained within a pressure vessel capable of withstanding extremely high internal pressures (e.g., 100,000 psi or more). Pressure is then rapidly applied to the die material whereby the omnidirectional compaction of the preform takes place. Fully dense silicon nitride devoid of sintering aid produced in the process has a porosity of less than 2.0% by volume, and most preferably such compositions will have higher isotropic strength properties and higher resistance to creep at a temperature of 900°C than fully dense silicon nitride containing 4% by weight of an aluminum oxide or yttrium oxide sintering aid.

# DENSIFIED SILICON NITRIDE CERAMICS AND THEIR PRODUCTION

This invention relates to new ceramic materials and methods for preparing them. More particularly, this invention provides densified silicon nitride ceramics or monoliths having enhanced physical properties at high temperatures by virtue of the methods and materials used in their production.

Fully dense silicon nitride is a desirable structural material. In order to produce this material it has been necessary heretofore to employ with the silicon nitride powder, sintering aids such as aluminum oxide, yttrium oxide or the like. Unfortunately, the resultant compacted products exhibit relatively poor physical properties at temperatures of 900°C and above. See for example, G. Ziegler et al, Journal of Materials Science, 1987, Vol. 22, pages 3041-3086. Attempts to produce fully dense silicon nitride simply by compacting silicon nitride powder have thus far been futile. For example, attempts to form fully dense silicon nitride by subjecting silicon nitride powder to rapid omnidirectional compaction under extremely high pressures and with temperatures as high as 1400°C reportedly have been unsuccessful.

This invention is believed to successfully achieve the desired goal of providing fully dense or essentially fully dense compacted silicon nitride materials having a combination of highly desirable properties even under high temperatures conditions (e.g., 900°C and above). Pursuant to this invention the provision of silicon nitride ceramics or monoliths having under such high temperature conditions good oxidation resistance, superior creep properties, and high strength characteristics is contemplated pursuant to this invention.

In accordance with one embodiment of this invention, a silicon nitride preform composed of an intimate mixture of crystalline silicon nitride and an amorphous Si-N or Si-N-C or Si-C phase is subjected to rapid omnidirectional compaction. Because of the presence of the amorphous phase, the preform is believed to possess atomic (nanosized) sintering sites which enable compaction with full sintering to occur yielding a densified product which retains its desirable strength and creep resistance properties even when subjected to temperatures in the range of 900°C and above. The preform used in this process may be formed by pyrolyzing in an atmosphere of nitrogen or ammonia, a molded part made from an intimate mixture of finely divided silicon nitride powder and a finely divided preceramic organosilicon polymeric binder, preferably a polycarbosilane or polycarbosiloxane, and most preferably an organopolysilazane. During the pyrolysis the organosilicon polymeric binder produces the amorphous Si-N or Si-N-C or Si-C phase, the makeup of which depends upon the makeup of the polymer used. It will be thus be understood and appreciated that the silicon nitride products of this invention may contain minor quantities of silicon-nitrogen-carbon and/or silicon-carbon ceramics resulting from the pyrolysis of the organosilicon polymeric binder employed in the production of the overall ceramic composition.

The preforms used in the rapid omnidirectional compaction step most preferably contain from 60 to 95% by weight of crystalline silicon nitride and from 40 to 5% by weight of the amorphous Si-N or Si-N-C or Si-C phase (hereinafter referred to as "organosilicon polymer-derived amorphous phase"). For best results the organosilicon polymer-derived amorphous phase should be substantially uniformly distributed throughout the preform.

In conducting the rapid omnidirectional compaction step, the preform is positioned within a body of molten die material, preferably a molten ceramic material such as molten glass, which in turn is maintained within a pressure vessel capable of withstanding extremely high internal pressures. Pressure is then rapidly applied to the die material whereby the omnidirectional compaction of the preform takes place. Mechanical, hydraulic or like presses are caused to apply a pressure upon the die material of at least about 75,000 psi (520,000 kPa), and most preferably 100,000 psi (690,000 kPa) or more. Compression times of up to about five minutes will usually be employed in this step, although in most cases application of pressures of 100,000 psi (690,000 kPa) or more to the molten die material for from one to two minutes will suffice. The molten die material will normally be maintained at temperatures of 1,200°C or above, most preferably in the range of 1,400 to 2,000°C. Apparatus suitable for use in conducting this operation has been described heretofore -- see for example U. S. Pat. No. 4,704,252 and references cited therein.

In another of its embodiments this invention provides a process for the production of densified silicon nitride ceramics which comprises subjecting a silicon nitride preform composed of an intimate mixture of from 60 to 95% by weight of crystalline silicon nitride and 40 to 5% by weight of an organosilicon polymer-derived amorphous phase to rapid omnidirectional compaction at an effective sintering temperature for said preform whereby a fully dense silicon nitride is formed, said preform being devoid of any sintering aid (i.e., the products of this invention do not contain any appreciable quantity of any metal oxide of the type normally used as sintering aids, such as MgO, $Al_2O_3$, $Y_2O_3$, or the like).

Pursuant to still another embodiment of this invention, there is provided as a new composition of matter, fully dense silicon nitride devoid of any sintering aid. As used herein the term "fully dense" means that the silicon nitride has a porosity as measured by helium pycnometry of less than 2.0% by volume, preferably less than 1.0% by volume, and most preferably less than 0.5% by volume. Most preferably such compositions will have higher isotropic strength properties and higher resistance to creep at a temperature of 900°C than fully dense silicon nitride containing 4% by weight of an aluminum oxide or yttrium oxide sintering aid.

The above and other embodiments and features of this invention will become still further apparent from the ensuing description and appended claims.

To prepare the preforms used in the practice of this invention use may be made of various procedures and/or materials such as are described in U. S. Pat. Nos. 4,482,669; 4,543,344; 4,612,383; 4,645,807; 4,650,837; 4,659,850; 4,705,837; 4,719,273; and 4,722,988, provided the preform contains from 5 to 40% by Weight of organosilicon polymer-derived amorphous phase with the balance being composed essentially entirely of crystalline silicon nitride. However in the practice of this invention it is particularly preferred to employ the procedures described hereinafter.

To begin with, an intimate mixture of 60-95% by weight of silicon nitride powder with 5-40% by weight of a preceramic organic silicon polymer binder, preferably an organopolysilazane, is formed. This mixture is pulverized to form particles having a particle size smaller than 105 micrometers (i.e., particles which pass through a 105 micrometer sieve) and these small particles are then molded into the desired shape. The resultant shapes are then pyrolyzed in an inert atmosphere or under ammonia to a temperature of 1200-1450°C whereby the preform is formed.

Silicon nitride powders that can be employed in the process are commercially available materials that vary from very fine to relatively coarse powders. The preferred powders have a particle size of five micrometers or less, most preferably in the range of 0.1-1.0 micrometer.

The binder that is mixed with the silicon nitride powder is preferably a polysilizane of the type described in U. S. Pat. No. 4,482,669, i.e., a polysilazane prepared by reacting an organodihalosilane with ammonia, treating the ammonolysis product with a basic catalyst which is capable of deprotonating an NH group that is adjacent to an SiH group, and quenching the resultant product with an electrophilic quenching reagent. A mixture of such polysilazanes may also be employed. For example, the binder may be one or more polysilazanes prepared by reacting methyldichlorosilane with ammonia, treating the ammonolysis product with potassium hydride, and quenching the resultant product with methyl iodide or dimethylchlorosilane. The utilizable polymers are solids which are soluble in common organic solvents, such as aliphatic or aromatic hydrocarbons or dialkyl or alicyclic ethers, including solid mixtures of normally solid and normally liquid organosilicon polymers, most preferably polysilazanes.

The alkali metal content of the polysilazane should not be higher than about 100 ppm, preferably 5 ppm or less. If the polymer as prepared contains higher amounts of alkali metal, the extent of such impurities can be reduced to desired levels by any suitable standard procedure.

If desired, the mixture of silicon nitride powder and preceramic silicon polymer binder may be modified by inclusion of optional ingredients that will not adversely affect the rapid omnidirectional compression step. Thus dispersing agents such as polyisobutenyl succinimides, and lubricants such as higher fatty acids or esters or amides thereof, higher alcohols, paraffin wax, or low molecular weight polyolefins can be used. When employed, such additives are used in minor amounts, e.g., up to about 5% by weight of one or more dispersing agents and up to about 15% by weight of one or more lubricants, based on the weight of the remainder of the composition.

The silicon nitride powder and the polymeric binder are pulverized to less than 105 micrometer size and intimately mixed together using any suitable equipment such as a conventional mill or the like. However, it is particularly convenient to conduct the process by dispersing the silicon nitride powder in an organic solvent solution of the binder (e.g., a solution in an aliphatic or aromatic hydrocarbon, such as hexane or toluene, or a dialkyl or alicyclic ether, such as diethyl ether or tetrahydrofuran), preferably at room temperature, removing the solvent (e.g., by rotary evaporation followed by vacuum distillation), ball milling the resultant chunks of powder/binder, and then sieving to remove any particles having a particle size larger than about 105 micrometers.

Ceramics may be prepared from the preceramic compositions by molding them at a temperature and pressure suitable for the parts being made, usually at a temperature of 60-225°C and a pressure of 6.8-343 MPa, using any suitable shaping process, such as compression, injection, or transfer molding, or extrusion, and then pyrolyzing the molded composition in an inert atmosphere, such as nitrogen or argon, or in an ammonia atmosphere, to a temperature of 1200-1450°C, preferably about 1300°C. The time required for the pyrolysis varies with the ultimate pyrolysis temperature, being at least one hour at the preferred pyrolysis temperature of about 1300°C, a shorter time at higher temperatures, and a longer time at lower temperatures. It is particularly useful to pyrolyze the molded composition by (1) heating it to 1300°C at rates of 60°C/hour from room temperature to 60°C, 30°C/hour from 60°C to 260°C, 120°C/hour from 260°C to 1260°C, and 60°C/hour from 1260°C to 1300°C, maintaining the temperature at 1300°C for one hour, cooling to 900°C at a rate of 120°C/hour, and conducting the remainder of the cooling at an ambient rate or (2) heating it to 1400°C at rates of 60°C/hour from room temperature to 60°C, 15°C/hour from 60°C to 260°C, 120°C/hour from 260°C to 1260°C, and 60°C/hour from 1260°C to 1400°C, maintaining the temperature at 1400°C for 45 minutes, and cooling to room temperature.

The best mode presently contemplated for carrying out this invention is set forth in the following six-step procedure:

1) Synthesis of Polysilazane - Ammonolysis Reaction - A suitable reaction vessel is charged with 14L of anhydrous tetrahydrofuran and cooled to about 0°C, after which 1497g (13.01 mols) of methyldichlorosilane is added to the vessel, and stirring at about 60 rpm is begun. A slow steady stream of 745g (43.7 mols) of anhydrous ammonia gas is introduced into the vessel at a flow rate such that the reaction pressure is maintained at or below 206.8 kPa, and the reaction temperature is kept in the range of 0-10°C. Then the reaction mixture is stirred at 0°C for about three hours, after which the coolant flow on the vessel is shut off, and the system is put under gentle nitrogen purge to allow the reaction mass to warm to room temperature and the majority of the excess ammonia to vent off. Then the reaction mass is poured into flasks and filtered in a dry box with a sintered glass filter having pore diameters of 4.0-5.5 micrometers.

2) Synthesis of Polysilazane - Polymerization - The clear filtrate from step 1 above is discharged into a polymerization vessel previously charged with a suspension of 2.5g (0.063 mol) of KH powder in about 100 mL of anhydrous tetrahydrofuran chilled to 0.C. The reaction mixture is maintained at 0°C for about 8 hours and then allowed to warm gradually to about 22°C. After a total of about 26 hours of polymerization time at 0-22°C, the reaction is quenched by adding about 11.9g (0.063 mol) of dimethylchlorosilane to the polymerization solution. The polymer product is isolated to a dry powder by vacuum distillation, after which the dry residue is redissolved in anhydrous cyclohexane. The cyclohexane solution is filtered and the filtrate vacuum dried to provide a white solid polysilazane having a potassium content of less than 5 ppm, based on the weight of the polymer.

3) Formulation of Preceramic Mixture - A mixture of 18.2g of polysilazane from step 2 above and 0.3g of a commercial polyisobutenyl succinimide dispersant in 200g of anhydrous toluene is stirred magnetically for about 15 minutes to obtain a homogeneous solution, after which 42g of $Si_3N_4$ powder (which is predominantly alpha-silicon nitride and has an average particle size of 0.8 micrometer and a specific surface area of 7-10 $m^2/g$) is added to the solution. The mixture is stirred magnetically for 60 minutes and then ultrasonicated for about one hour to disperse the silicon nitride powder, and the majority of the toluene is then flashed off to provide a non-flowing gray residue. The residue is dried under high vacuum for several days and then pulverized lightly with a mortar and pestle to obtain a free-flowing formulation powder which is then ball milled for about one hour with about 200 cc of silicon carbide milling balls having a diameter of about 0.25 inch (6.35mm) in a 2.5-pint (1.2 litre) mill jar, after which the milling balls are removed. The milled powder is then dry-sieved through a screen having size openings of 106 micrometers. Any powder that does not pass through the sieve is ball milled again until all of the formulation passes through.

4) Formation of Molded Preceramics - Each of six green discs having a nominal diameter of 12.7 mm and a nominal thickness of 2.54 mm is molded from the formulation from step 3 above. In the preparation of each of these discs, about 0.8g of the formulation is loaded into a suitable mold in a nitrogen glovebox; and the mold is evacuated to less than about 133 pascals, sealed under vacuum, transported to a hydraulic press, reconnected to a vacuum line, and evacuated to a pressure of not more than about 67 pascals -- a vacuum level that is maintained throughout the remainder of the molding process. The evacuated mold is placed snugly between the press platens, which are preheated to about 182°C and allowed to preheat for 10 minutes, after which a force of 2268-2722 kg (175-210 MPa pressure) is applied to the mold and maintained for about five minutes. After compression, the mold is sealed under vacuum and transported back into the glovebox, where it is allowed to cool for about five minutes. After cooling, the molded green disc is removed from the mold and stored in the glovebox.

5) Pyrolysis - Three of the green discs from step 4 above are pyrolyzed in a nitrogen atmosphere and the other three green discs are pyrolyzed in an ammonia atmosphere by heating them in their respective chambers containing the specified atmosphere to 1300°C at rates of 60°/hour from room temperature to 60°C, 30°C/hour from 60°C to 260°C, 120°C/hour from 260°C to 1260°C, and 60°C/hour from 1260°C to 1300°C, maintaining the temperature at 1300°C for one hour, cooling to 900°C at a rate of 120°C/hour, and allowing ambient-rate cooldown from 900°C to about room temperature, i.e., shutting down the furnace heaters when the temperature reaches 900°C and allowing the resultant furnace conditions to determine the rate of the remainder of the cooldown. After the pyrolyzed specimens have cooled to below 100°C, they are removed from the furnace and stored immediately in a dry nitrogen atmosphere. The specimens pyrolyzed under nitrogen yield preforms of which the amorphous polymer-derived phase typically contains (on a weight basis) about 55.8% Si, about 27.8% nitrogen, about 14.8% carbon and about 2.1% oxygen. The specimens pyrolyzed under ammonia yield preforms, the polymer-derived amorphous phase of which typically contains (on a weight basis) about 55.8% Si, about 40.9% nitrogen, about 0.4% carbon and about 2.0% oxygen.

6)Rapid Omnidirectional Compaction - Each of the six ceramic preforms from step 5 above is individually subjected to rapid omnidirectional compaction using apparatus of the type generally described in U. S. Pat. No. 4,704,252. In each case a pressure of approximately 100,000 psi (690,000 kPa) is applied omnidirectionally upon the respective preforms using molten glass as the liquid ceramic die material in which the preforms are encased as the pressure is applied. The conditions used in these operations are as follows:

| Preform | Temperature, °C | Time, min. |
|---|---|---|
| Nitrogen pyrolyzed | 1,400 | 3.0 |
| Ammonia pyrolyzed | 1,400 | 3.0 |
| Nitrogen pyrolyzed | 1,550 | 1.5 |
| Ammonia pyrolyzed | 1,550 | 1.5 |
| Nitrogen pyrolyzed | 1,700 | 1.0 |
| Ammonia pyrolyzed | 1,700 | 1.0 |

The resultant compacted silicon nitride monoliths are fully dense or essentially fully dense, and have better strength and creep resistance properties than corresponding monoliths prepared in the same manner but in addition containing 4% by weight of aluminum oxide or 4% by weight of yttrium oxide as a sintering aid.

This invention is susceptible to considerable variation in its practice within the spirit and scope of the following claims.

## Claims

1. A process for the production of a densified silicon nitride ceramic which comprises subjecting a silicon nitride preform composed of an intimate mixture of crystalline silicon nitride and an amorphous Si-N or Si-N-C or Si-C phase to rapid omnidirectional compaction.

2. A process according to Claim 1 wherein the preform is formed by pyrolysing in an atmosphere of nitrogen or ammonia, a molded part made from an intimate mixture of finely divided silicon nitride powder and a finely divided preceramic organosilicon polymeric binder.

3. A process according to Claim 2 wherein the said binder is an organopolysilazane.

4. A process according to Claim 3 wherein said organopolysilazane is formed by reacting an organodihalosilane with ammonia, treating the ammonolysis product with a basic catalyst which is capable of deprotonating an NH group that is adjacent to an SiH group, and quenching the resultant product with an electrophilic quenching reagent.

5. A process according to any one of claims 1 to 4 wherein the silicon nitride preform is composed of an intimate mixture of from 60 to 95% by weight of crystalline silicon nitride and 40 to 5% by weight of an amorphous Si-N or Si-N-C or Si-C phase and is devoid of a sintering aid and the rapid omnidirectional compaction is carried out at an effective sintering temperature for said preform whereby a fully dense silicon nitride is formed.

6. Fully dense compacted silicon nitride devoid of a sintering aid.